# EUROPÄISCHE PATENTANMELDUNG

(11) **EP 0 866 304 A1**
(43) Veröffentlichungstag der Anmeldung: **23.09.1998**
(21) Anmeldenummer: 98104402.7
(22) Anmeldetag: 11.03.1998
(51) Int. Cl.: G01B 5/30, G01B 7/14

(54) **Längenmesssystem**

(30) Priorität: 18.03.1997 DE 19711271
(71) Anmelder: CARL ZEISS JENA GmbH, 07745 Jena (DE)
(72) Erfinder: Freitag, Hans-Joachim, 07749 Jena (DE)
(74) Vertreter: Geyer, Werner, Dr.-Ing.

(57) **Zusammenfassung**

Bei einem Längenmeßsystem zur Messung der Relativlage zweier Objekte (1,3) in einer vorgegebenen Meßrichtung, mit einem eine Meßteilung (9) tragenden Teilungsträger (4), der an einem ersten (3) der beiden Objekte befestigt ist, und mit einem die Meßteilung (9) an einer Abtaststelle (7) abtastenden, am zweiten (1) der beiden Objekte befestigten Abtastkopf (6) ist der Teilungsträger (4) längssteif, jedoch senkrecht zur Meßrichtung federnd auslenkbar ausgebildet und nur am einen (5) seiner Enden am ersten Objekt (3) befestigt, während sein anderes Ende frei ausläuft, wobei der Teilungsträger (4) im Bereich des Abtastkopfes (6) zwangsgeführt (8) ist.

## Beschreibung

Die Erfindung bezieht sich auf ein Längenmeßsystem zur Messung der Relativlage zweier Objekte in einer vorgegebenen Meßrichtung, mit einem eine Maßteilung tragenden Teilungsträger, der am ersten der beiden Objekte befestigt ist, und mit einem die Meßteilung an einer Abtaststelle abtastenden, am zweiten der beiden Objekte befestigten Abtastkopf.

Solche Längenmeßsysteme werden bevorzugt zur Messung von Relativbewegungen zwischen zwei Maschinenbauteilen eingesetzt, deren eines feststeht und deren anderes demgegenüber verfahrbar ist. Dabei bestehen in der Regel hohe Anforderungen an die Führung des Abtastkopfes relativ zur Teilung auf dem Teilungsträger, und zwar sowohl was die Lagetoleranzen senkrecht zur Meßrichtung, als auch was die Verdrehtoleranzen betrifft. Im Werkzeugmaschinenbau und auf vielen anderen Anwendungsgebieten erfüllen die Maschinenführungen, insbesondere bei großen statischen und dynamischen Belastungsschwankungen, diese hohen Anforderungen nicht, so daß der Abtastkopf in einem speziellen Meßwagen aufgenommen wird, der auf einer meßsysteminternen Hilfsführung geführt wird, die hochpräzise zum Teilungsträger ausgerichtet ist (Firmenschrift "NC-Längenmeßsysteme" der Firma Heidenhain, Juni 1996, zum Längenmeßsystem LS 106). Zum Ausgleich der Führungsabläufe beider Führungen zueinander werden zwischen einem Mitnehmer, der fest an einem ersten Maschinenelement befestigt ist, und dem Meßwagen, der auf der Hilführung im Meßsystem abläuft, in Meßrichtung steife, ansonsten aber weiche oder elastische Koppelglieder angeordnet.

In der Firmenschrift "NC Linear Encoders" der Firma Heidenhain vom Juli 1994 ist eine Anordnung beschrieben, bei der als Koppelglied eine Kugelfläche eingesetzt wird, die unter Vorspannung durch eine Zugfeder an einer ausgerichteten Anlagefläche anliegt. Über Gleitbewegungen und Kippungen zwischen der Kugelfläche und der Anlagefläche werden die auftretenden Führungsfehler ausgeglichen. Eine ähnliche Lösung ist auch in der DE 39 08 260 C1 angegeben, bei der die Kopplung aus einer ebenen Fläche am Meßwagen und einer zweiten ebenen Fläche am Mitnehmer sowie einer zwischen beiden Flächen angeordneten Kugel besteht, die über eine Feder stets in Kontakt mit beiden Anlageflächen gehalten wird. Die über die Feder erzwungene kraftschlüssige Ankopplung erfordert jedoch zum einen starke Federkräfte und zur Reduzierung der Hertzschen Abplattungen gehärtete Anlageflächen zwischen Kugel und Mitnehmer bzw. zwischen Kugel und Meßwagen. Darüber hinaus ist ein großer Fertigungs- und Justieraufwand erforderlich, um die Anlageflächen exakt senkrecht zur Meßrichtung auszurichten.

Alle genannten Lösungen haben den großen Nachteil, daß nur relativ kleine Abweichungen ausgeglichen werden können.

Bei einer anderen bekannten Anordnung (DD 245 482 A1) wird zum Ausgleich von Ablauffehlern ein elastisches Maßband eingesetzt, das in Längsrichtung gesehen beidseitig eingespannt ist und mittels spezieller Führungselemente im Abtastkopf zwangsgeführt wird. Auch diese Lösung gestattet nur den Ausgleich kleiner Ablauffehler, da ansonsten die mechanischen Spannungen im elastischen Teilungsträger zu groß werden. Vor allem bei kurzen Meßsystemen können die erforderlichen Auslenkkräfte zu groß werden.

Ausgehend hiervon liegt der Erfindung die Aufgabe zugrunde, ein Längenmeßsystem vorzuschlagen, das mit einfachen Mitteln arbeitet und den Ausgleich auch relativ großer Führungstoleranzen ermöglicht.

Erfindungsgemäß wird diese Aufgabe bei einem Meßsystem der eingangs genannten Art dadurch gelöst, daß der Teilungsträger längssteif, jedoch senkrecht zur Meßrichtung federnd auslenkbar ausgebildet und nur an einem seiner Enden am ersten Objekt befestigt ist, während sein anderes Ende frei ausläuft, wobei der Teilungsträger im Bereich des Abtastkopfes zwangsgeführt ist.

Das erfindungsgemäße Meßsystem hat zunächst die vorteilhafte Eignung, daß es über einen großen Meßbereich in kleinen Abschnitten gut linear reagiert, wobei der besondere Vorteil gegeben ist, daß ein großer Abstand zwischen der Meßstelle (Abtastkopf) und der Befestigungsstelle für den Teilungsträger überbrückt werden kann. Zudem ist das erfindungsgemäße Meßsystem ganz besonders preisgünstig und läßt sich sehr einfach montieren. Es hat aber auch noch den weiteren Vorteil, daß zwischen den zueinander bewegbaren Teilen durchaus keine direkte Verbindung (etwa im Sinne einer Führung des einen Teiles gegenüber dem anderen) bestehen muß.

Bei dem erfindungsgemäßen Meßsystem macht es keine Schwierigkeit, die Zwangsführung des Teilungsträgers im Bereich des Abtastkopfes so auszulegen, daß die Lageveränderungen der Meßteilung zum Abtastkopf stets kleiner sind als die zulässigen Abtasttoleranzen.

Die Anordnung einer geeigneten Zwangsführung im Bereich des Abtastkopfes gibt die Möglichkeit, die zwangsführenden Elemente innerhalb eines entsprechenden Bereiches je nach Zweckmäßigkeit anzuordnen. Besonders bevorzugt werden jedoch die Elemente zur Zwangsführung des Teilungsträgers so angeordnet, daß dieser direkt an der Abtaststelle des Abtastkopfes oder unmittelbar vor oder direkt hinter derselben zwangsgeführt wird.

Durch das erfindungsgemäße Meßsystem wird ein Vorteil insbesondere dahingehend erreicht, daß zum Ausgleich auch größerer Führungstoleranzen zwischen Abtastkopf und Teilungsträger die technisch komplizierten und sehr aufwendigen Lösungen für die Ankopplungen sowohl des Abtastkopfes, wie auch des Teilungsträgers, wie sie im Stand der Technik eingesetzt wurden, durch sehr einfach zu realisierende Befestigungen abgelöst werden können.

Die Anordnung des nur an seinem einen Ende befestigten Teilungsträgers innerhalb des erfindungsgemäßen Längenmeßsystems kann in jeder geeigneten Weise vorgenommen werden. Ganz besonders bevorzugt wird der Teilungsträger jedoch hängend angeordnet, so daß entsprechend auch eine senkrecht oder nahezu senkrecht vertaufende Meßrichtung vorliegt.

Eine besonders vorzugsweise Ausgestaltung des erfindungsgemäßen Längenmeßsystems besteht auch darin, daß der Teilungsträger am ersten Objekt so befestigt ist, daß er seitlich zur Meßrichtung verschwenkbar ist, was z.B. bevorzugt durch eine Drehnietverbindung o.ä. vorgenommen werden kann. Vorteilhafterweise wird der Teilungsträger ferner über eine Kardangelenkanordnung am ersten Objekt befestigt, wodurch die Möglichkeit gegeben ist, daß sowohl Auslenkungen seitlich zur Längsrichtung des Meßträgers bzw. zur Meßrichtung, wie auch senkrecht hierzu sowie solche aufgrund von Verdrehungen um die Längsachse des Teilungsträgers unschwer ausgeglichen werden können.

Ganz besonders bevorzugt wird bei dem erfindungsgemäßen Längenmeßsystem der Teilungsträger in Form eines Streifens ausgebildet, bei dem die Kardangelenkanordnung aus zwei beidseits des Teilungsträgers an gleicher Längsposition desselben angebrachten seitlichen Einkerbungen bzw. Aussparungen an diesem (in Form eines sogenannten "Wespentaillen"-Gelenkes) gebildet wird, zwischen denen ein im Vergleich zur Breite des Teilungsträgers wesentlich dünnerer Mittelsteg des Teilungsträgers verbleibt, der bevorzugt eine Breite von höchstens 50 % der gesamten Breite des Teilungsträgerbandes, besonders bevorzugt jedoch nur 20 bis 40 % dessen ganzer Breite, insbesondere vorzugsweise jedoch ein Drittel dessen gesamter Breite, beträgt. Solche Anordnungen an streifenförmigen Trägern bilden Kardangelenkanordnungen aus, die schon bei der Herstellung des Teilungsträgers unschwer angebracht werden können, keinen großen Aufwand bedingen und dennoch einen sehr wirksamen kardanischen Effekt bei gleichzeitig großer Steifigkeit in Längsrichtung gewährleisten.

Eine andere bevorzugte Ausgestaltung des erfindungsgemäßen Längenmeßsystemes besteht auch darin, daß die Meßteilung nicht direkt auf den Teilungsträger, sondern auf ein dünnes Band aufgebracht ist, das in seiner Längs- bzw. Meßrichtung längssteif, jedoch senkrecht hierzu flexibel ist und mit dem Teilungsträger über die Kapillarwirkung einer dünnen, viskosen Zwischenschicht verbunden ist. Bevorzugt ist der Teilungsträger ein Stahlband mit einer geschliffenen polierten Oberfläche sowie mit gerundeten Längskanten. Der Teilungsträger kann jedoch gleichermaßen vorzugsweise auch ein in Längsrichtung zwar steifer, senkrecht hierzu jedoch elastisch federnder Draht sein.

Bei der Ausbildung des Teilungsträgers als elastisches Stahl- bzw. Metallband, das nur an einem Ende am ersten Objekt befestigt und im Bereich des Abtastkopfes zwangsgeführt wird, läßt sich durch die Elastizität des Metallbandes ein Führungsversatz senkrecht zur Meßrichtung sowie auch Verdrehungen um die Längsachse sowie um eine senkrecht hierzu liegende Achse unschwer ausgleichen.

Die Ausbildung des Teilungsträgers und der Meßteilung in Form voneinander getrennter bandförmiger Körper, die miteinander über die Kapillarwirkung einer dünnen viskosen Zwischenschicht verbunden sind und die Schaffung eines flexiblen, biegelinienentkoppelten bandförmigen Maßstabs gestatten, ermöglicht es, die erheblichen Biegefehleranteile gut egalisieren zu können, die beim Ausgleich größerer Ablauf- und Kippfehler bei relativ großen Biegungen auftreten. Die Kopplung wird durch die Kapillarwirkung der viskosen Zwischenschicht zwischen den beiden Bändern erzeugt, wobei gleichzeitig die Bänder bezüglich der mechanischen Spannungen weitestgehend voneinander entkoppelt sind. Denn diese Bänder sind nicht mehr miteinander verklebt, sondern "schwimmen" auf einem nur wenige µm dicken viskosen Film gegeneinander. Bei kleineren Verschiebegeschwindigkeiten der Bänder untereinander tritt dabei keine nennenswerte Kraftübertragung zwischen den beiden Bändern auf. Durch die relativ große Kapillarwirkung dieser dünnen Zwischenschicht werden die Bänder dennoch fest zusammengehalten und bilden einen stabilen Verbund. Bei schnellen Verschiebegeschwindigkeiten zwischen den Bändern nimmt die Reibung zwischen den Bändern und der Zwischenschicht stark zu, so daß dann auch in Längsrichtung des Verbundes eine hohe Stabilität erreicht wird. Durch diese Art der Kopplung werden auftretende Biegespannungen in den Einzelbändern, vor allem im dünnen Maßband, stark reduziert, da sich bei den langsam ablaufenden Biegebewegungen die Spannungen in den Einzelbändern weitestgehend gegenseitig entkoppelt aufbauen und infolge der geringen Dicke die auftretenden Biegespannungen auch sehr klein bleiben. Dadurch wird auch der auftretende Längenfehler infolge von Durchbiegungen stark reduziert und für die meisten Meßaufgaben vernachlässigbar klein. Die viskose Zwischenschicht sorgt aber weiterhin auch noch dafür, daß der Bänderverbund gegenüber einem dicken Band schwingungsgedämpft ist.

Das erfindungsgemäße Längenmeßsystem läßt sich in einer großen Vielzahl unterschiedlichster Anwendungsgebiete leicht und einfach und mit großem Vorteil einsetzen. Ganz besonders vorteilhaft erweist sich jedoch eine Anwendung des erfindungsgemäßen Längenmeßsystemes bei einem Niveauregelungssystem von Fahrzeugen oder zur Messung der Auslenkung fliegend gelagerter Trommeln in Waschmaschinen oder Wäscheschleudern.

Die Erfindung wird nachfolgend anhand der Zeichnung im Prinzip beispielshalber noch näher erläutert. Es zeigen:
Die Fig. 1 und 2 die prinzipielle Darstellung eines erfindungsgemäßen Meßsystems, eingesetzt zur Messung der Relativlage zwischen einem fixen und einem an diesem fliegend gelagerten zweiten Objekt, wobei Fig. 1 die Ausgangsstellung (Nullstellung) und Fig. 2 die Anordnung nach einer erfolgten Auslenkung wiedergibt;
die Fig. 3 und 4 schematische Längsschnitte durch zwei verschiedene Ausführungsformen für einen bei der Erfindung einsetzbaren Teilungsträger mit einer Meßteilung, sowie
die Fig. 5, 6 und 7 die prinzipiellen Darstellungen drei unterschiedlicher Anordnungen zur Befestigung des Teilungsträgers bzw. dessen Ausgestaltung bei einem erfindungsgemäßen Meßsystem.

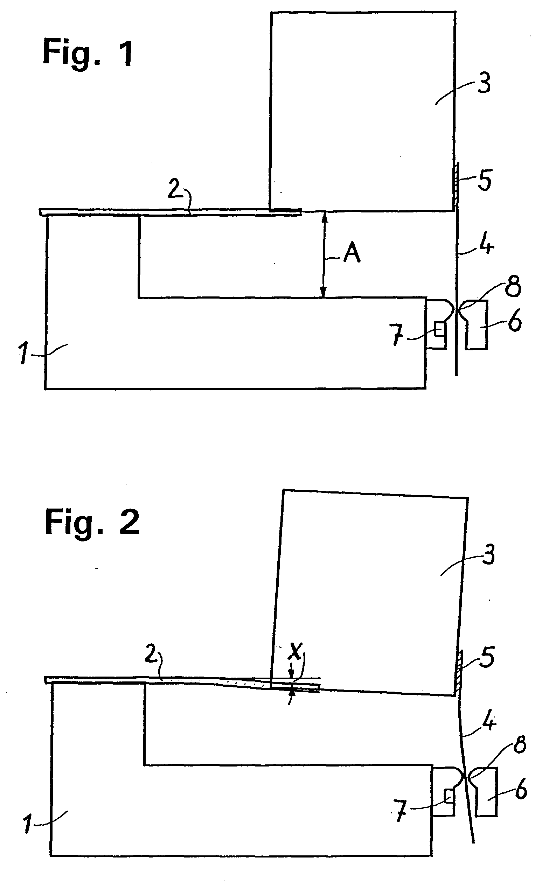

Die Fig. 1 und 2 zeigen rein prinzipiell ein Objekt 1, das einen länglichen Grundkörper aufweist, der an seinem einen freien Ende mit einem nach oben ragenden Abschnitt versehen ist. An diesem ist oben das eine Ende eines Haltearmes 2 starr befestigt, der über den oberen Abschnitt des Objektes 1 seitlich vorragt und an seinem frei vorragenden Ende ein Objekt 3 trägt, das in der in Fig. 1 gezeichneten Nullstellung (Ausgangsstellung) sich in einem Abstand A oberhalb des Grundkörpers des Objektes 1 befindet. Am Objekt 3 ist auf dessen der Befestigungsstelle am Haltearm 2 abgewandten Seite ein mit einer Meßteilung versehener Teilungsträger 4 in hängender Anordnung an seinem oberen Ende 5 in geeigneter Form befestigt, worauf noch weiter unten einzugehen sein wird.

Der Teilungsträger 4, der eine geeignete Meßteilung trägt, ragt in seinem unteren Bereich in einen Abtastkopf 6 hinein, der an einer Abtaststelle mit einer Abtasteinrichtung 7 versehen ist. Oberhalb der Abtasteinrichtung 7 ist am Abtastkopf 6 eine in den Fig. 1 und 2 in Form zweier gegeneinander vorragender Rundflächen schematisch dargestellte Zwangsführung 8 für den Teilungskörper 4 ausgebildet, die, wie die Fig. 1 und 2 zeigen, in Durchlaufrichtung des Teilungsträgers 4 durch den Abtastkopf 6 hindurch unmittelbar vor der Abtasteinrichtung 7 angeordnet ist. Die Zwangsführung 8, die auch direkt hinter der Abtasteinrichtung 7 oder an der Abtaststelle 6 wirksam vorgesehen sein könnte, stellt dabei sicher, daß der Teilungsträger 4 mit seiner Meßteilung an der Abtaststelle, d.h. an seinem neben der Abtasteinrichtung 7 liegenden Bereich, an dem die Abtastung erfolgt, keine größere Ablenkung relativ zur Abtasteinrichtung 7 erfährt als die, die für eine ordnungsgemäße Durchführung der Abtastung noch zulässig ist.

Die in den Fig. 1 und 2 gezeigte schematische Anordnung der Objekte 1 und 3 zueinander mit der fliegenden Aufhängung des Objektes 3 am Objekt 1 entspricht prinzipiell der Anordnung, wie sie in Waschmaschinen oder Wäscheschleudern für die Schleudertrommel (entsprechend dem Objekt 3) relativ zum Gehäusegestell (entsprechend dem Objekt 1) zutrifft.

Wird nun bei einer solchen Anordnung, etwa in Form einer Wäscheschleuder, die (fliegend gelagerte) Schleudertrommel (Objekt 3) mit Wäsche beladen, kommt es zu einer kleinen Auslenkung bzw. Absenkung X der Trommel (entsprechend Objekt 3) in Richtung nach unten zum Objekt 1 hin, wie dies in Fig. 2 schematisch dargestellt ist. Dabei wird der Teilungsträger 4, der längssteif als ein poliertes und geschliffenes Stahlband mit abgerundeten Seitenkanten ausgebildet, jedoch senkrecht zu seiner Längsebene (und damit zur Ebene der Meßteilung) federnd auslenkbar ist, in der in Fig. 2 prinzipiell dargestellten Weise entsprechend der Auslenkung X in den Abtastkopf 6 hineingeschoben. Infolge der federnden Auslenkbarkeit des Teilungsträgers 4 kann der dabei auftretende seitliche Versatz unschwer ausgeglichen werden, wobei die Zwangsführung 8 sicherstellt, daß an dieser Stelle die Durchlaufposition des Teilungsträgers 4 zum Abtastkopf 6 stets festgelegt ist, d.h. gleich bleibt, und die bei dem gezeichneten Ausführungsbeispiel dieser Zwangsführung 8 direkt nachgeschaltete Abtasteinrichtung 7 an der Abtaststelle die gewünschte Abtastung der Meßteilung vornehmen kann, ohne daß dabei die zulässige Abstandstoleranz zur Abtasteinrichtung 7, wie sie für eine ordnungsgemäße Messung erforderlich ist, überschritten wird.

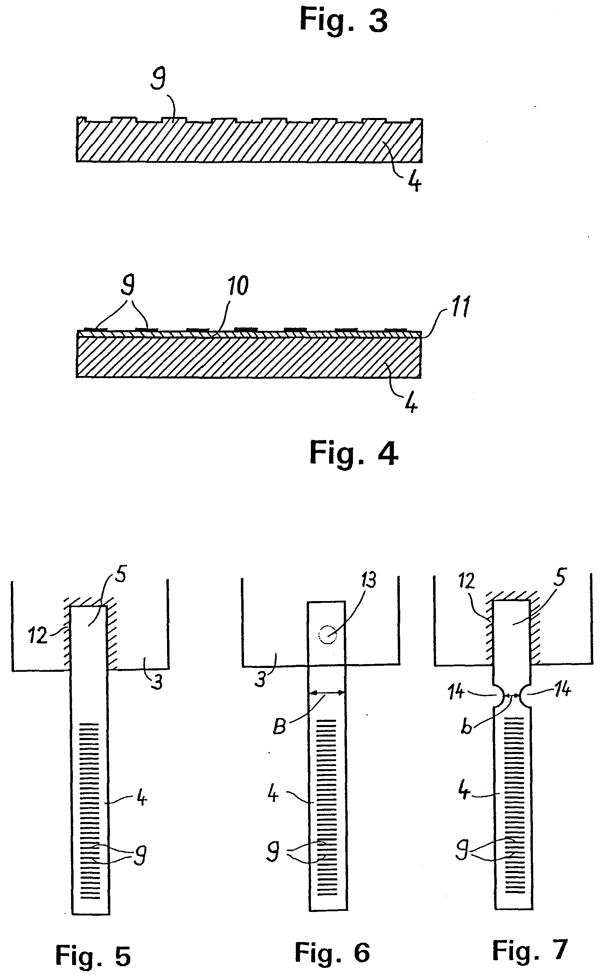

In den Fig. 3 und 4 sind Längsschnitte durch zwei unterschiedliche Ausbildungen des Teilungsträgers 4 mit der Meßteilung 9 dargestellt.

Bei der Ausbildung nach Fig. 3 weist der bandförmige Teilungsträger 4 auf seiner Oberfläche quer zu seiner Längsrichtung verlaufende und die Meßteilung 9 ausbildende Erhebungen auf.

Bei der Anordnung, wie sie in Fig. 4 im Längsschnitt dargestellt ist, ist der bandförmige Teilungsträger 4 an seiner Oberfläche nicht direkt mit der Meßteilung 9 versehen; auf ihm liegt vielmehr ein dünnes Band 10 auf, auf dessen Oberseite die Meßteilung 9 in geeigneter Form aufgedruckt, eingeätzt oder sonstwie angebracht ist.

Während der Teilungsträger 4 längssteif, aber senkrecht hierzu federnd auslenkbar ist, ist das von ihm getragene Band 10 kleinerer Dicke ebenfalls längssteif, senkrecht zu seiner Oberfläche jedoch flexibel, so daß es einer federnden Auslenkung des Teilungsträgers 4 ohne weiteres folgen kann. Teilungsträger 4 und Band 10 mit der Meßteilung 9 sind über eine dünne viskose Zwischenschicht 11, d.h. über die in dieser wirkenden Kapillarkräfte, miteinander verbunden. Dadurch besteht die Möglichkeit, daß sich das Band 10 relativ zum Teilungsträger 4 in dessen Längsrichtung bei langsamen Bewegungen verschieben läßt, während es dabei durch die Kapillarkräfte stets mit ihm verbunden bleibt.

In den Fig. 5 bis 7 sind schließlich unterschiedliche Möglichkeiten der Befestigung des Teilungsträgers 4 am Objekt 3 gezeigt.

Bei der Anordnung aus Fig. 5 ist das obere Ende 5 des Teilungsträgers 4, der die Meßteilung 9 trägt, mittels einer Schweißnaht fest am Objekt 3 befestigt. Bei dieser Anbringung kann der Teilungsträger 4 senkrecht zu seiner Längsrichtung (also bei der Darstellung in Fig. 5: senkrecht zur Zeichenebene) federnd verbogen werden, ist in Längsrichtung jedoch steif.

Die Darstellung nach Fig. 6 zeigt eine Verbindung des oberen Endes 5 des Teilungsträgers 4 über eine Nietverbindung 13 am Objekt 3, wodurch in Längsrichtung des Teilungsträgers 4 eine längssteife Befestigung sichergestellt ist, während der Teilungsträger 4 nicht nur senkrecht zur Längsrichtung (senkrecht zur Zeichenebene) federnd verbiegbar ist, sondern auch noch zusätzlich seitlich um den Befestigungsniet 13 (oder ein anderes entsprechendes Gelenk) herum verschwenkt werden kann.

Bei der Darstellung nach Fig. 7 schließlich ist das obere Ende 5 des Teilungsträgers 4 wiederum mittels einer Schweißnaht 12 am Objekt 3 befestigt; in einem jedoch nur geringen Überstand vom Objekt 3 ist der Teilungsträger 4 mit zwei seitlichen halbkreisförmigen, aufeinanderzu gerichteten Ausnehmungen 14 versehen, die zwischen sich einen Mittelsteg einer Breite b freilassen, die deutlich geringer als die Breite B des Teilungsträgers 4 ist, vorzugsweise 50 % derselben oder kleiner beträgt, besonders bevorzugt jedoch 5 bis 30 % derselben und ganz besonders vorteilhafterweise ein Fünftel der Breite B ausmacht. Anstelle der in Fig. 7 gezeigten halbkreisförmigen Ausnehmungen 14 können selbstverständlich auch andere Formen der Ausnehmung 14 vorgesehen sein, insbesondere im Querschnitt V-förmige oder schlitzförmige seitliche Aussparungen, die jedoch allesamt zu einer kardanischen Anordnung im Sinne einer sogenannten "Wespentaille" führen und eine kardanische Aufhängung des unterhalb dieser Stelle liegenden Abschnitts des Teilungsträgers 4 relativ zu seinem darüberliegenden und am zweiten Objekt 3 starr befestigten Abschnitt ergeben.

## Patentansprüche

1. Längenmeßsystem zur Messung der Relativlage zweier Objekte (1,3) in einer vorgegebenen Meßrichtung, mit einem eine Meßteilung (9) tragenden Teilungsträger (4), der an einem ersten (3) der beiden Objekte befestigt ist, und mit einem die Meßteilung (9) an einer Abtaststelle (7) abtastenden, am zweiten (1) der beiden Objekte befestigten Abtastkopf (6), **dadurch gekennzeichnet**, daß der Teilungsträger (4) längssteif, jedoch senkrecht zur Meßrichtung federnd auslenkbar ausgebildet und nur am einen (5) seiner Enden am ersten Objekt (3) befestigt ist, während sein anderes Ende frei ausläuft, wobei der Teilungsträger (4) im Bereich des Abtastkopfes (6) zwangsgeführt (8) ist.

2. Längenmeßsystem nach Anspruch 1, dadurch gekennzeichnet, daß der Teilungsträger (4) an der Abtaststelle des Abtastkopfes (6) zwangsgeführt (8) ist.

3. Längenmeßsystem nach Anspruch 1, dadurch gekennzeichnet, daß der Teilungsträger (4) direkt vor oder hinter der Abtaststelle (7) des Abtastkopfes (6) zwangsgeführt (8) ist.

4. Längenmeßsystem nach einem der Ansprüche 1 bis 3, dadurch gekennzeichnet, daß der Teilungsträger (4) hängend angeordnet ist.

5. Längenmeßsystem nach einem der Ansprüche 1 bis 4, dadurch gekennzeichnet, daß der Teilungsträger (4) am ersten Objekt (3) verschwenkbar (13) befestigt ist.

6. Längenmeßsystem nach einem der Ansprüche 1 bis 5, dadurch gekennzeichnet, daß der Teilungsträger (4) über eine Kardangelenkanordnung (14) am ersten Objekt (3) befestigt ist.

7. Längenmeßsystem nach Anspruch 6, dadurch gekennzeichnet, daß der Teilungsträger (4) streifenförmig ausgebildet ist und die Kardangelenkanordnung aus zwei beidseits des Teilungsträgers (4) an gleicher Längsposition desselben angebrachten seitlichen Einkerbungen bzw. Aussparungen (14) an diesem gebildet wird, zwischen denen ein im Vergleich zur Breite (B) des Teilungsträgers (4) wesentlich dünnerer Mittelsteg (b) des Teilungsträgers (4) verbleibt.

8. Längenmeßsystem nach einem der Ansprüche 1 bis 7, dadurch gekennzeichnet, daß Teilungsträger (4) und Meßteilung (9) als voneinander getrennte, bandförmige Körper (4,10) ausgebildet sind, wobei die Meßteilung (9) auf einem in Meßrichtung längssteifen, jedoch senkrecht hierzu flexiblen Band 10 angebracht ist, das mit dem Teilungsträger (4) über die Kapillarwirkung einer dünnen, viskosen Zwischenschicht (11) verbunden ist.

9. Längenmeßsystem nach einem der Ansprüche 1 bis 8, dadurch gekennzeichnet, daß der Teilungsträger (4) ein Stahlband mit einer geschliffenen polierten Oberfläche sowie mit gerundeten Längskanten ist.

10. Längenmeßsystem nach Anspruch 1, dadurch gekennzeichnet, daß der Teilungsträger (4) ein elastisch federnder Draht ist.

11. Anwendung eines Längenmeßsystems nach einem der Ansprüche 1 bis 9 bei einem Niveauregelungssystem für Fahrzeuge oder zur Messung der Auslenkung fliegend gelagerter Trommeln in Waschmaschinen oder Wäscheschleudern.
